Europäisches Patentamt

European Patent Office

Office européen des brevets

(19)

(11) Veröffentlichungsnummer: **0 276 483 B1**

# EUROPÄISCHE PATENTSCHRIFT

(12)

(45) Veröffentlichungstag der Patentschrift: **08.05.91**

(51) Int. Cl.5: **F16L 13/14**

(21) Anmeldenummer: **87119295.1**

(22) Anmeldetag: **29.12.87**

(54) **Rohranschluss, insbesondere für Flachrohrverdampfer.**

(30) Priorität: **23.01.87 DE 3701865**

(43) Veröffentlichungstag der Anmeldung:
**03.08.88 Patentblatt 88/31**

(45) Bekanntmachung des Hinweises auf die
Patenterteilung:
**08.05.91 Patentblatt 91/19**

(84) Benannte Vertragsstaaten:
**DE ES FR GB IT SE**

(56) Entgegenhaltungen:
**DE-A- 3 416 702**
**GB-A- 547 358**
**GB-A- 596 136**
**US-A- 4 172 496**

(73) Patentinhaber: **Behr GmbH & Co.**
**Mauserstrasse 3**
**W-7000 Stuttgart 30(DE)**

(72) Erfinder: **Ziegler, Karl-Otto, Dipl.-Ing. (FH)**
**Schwarzwaldstrasse 18**
**W-7140 Ludwigsburg 11(DE)**
Erfinder: **Geiger, Wolfgang**
**Hohenloher Strasse 2**
**W-7140 Ludwigsburg(DE)**

(74) Vertreter: **Wilhelm, Hans-Herbert, Dr.-Ing. et al**
**Wilhelm & Dauster Patentanwälte Hospital-**
**strasse 8**
**W-7000 Stuttgart 1(DE)**

EP 0 276 483 B1

## Beschreibung

Die Erfindung betrifft einen Rohranschluß für Flachrohrverdampfer nach dem Oberbegriff des Patentanspruches 1.

Es ist bekannt, Verdampfer an ihren Eintritts- bzw. Austrittsöffnungen mit Rohrbögen zu versehen, die beim Verlöten des Verdampfers mit eingelötet werden. Anschließend werden zur Fertigstellung des Verdampfers die Anschlußrohre an die Rohrbögen angelötet. Als nachteilig hat sich hierbei erwiesen, daß Flußmittel und Lot in den Verdampfer eindringen können, und dadurch die Funktionstüchtigkeit des Verdampfers beeinträchtigt wird. Außerdem fördert überschüssiges am bzw.im Verdampfer sich befindendes Flußmittel die Korrosion des Verdampfermaterials. Bei einer nachträglichen Lötung ist zudem darauf zu achten, daß bereits bestehende Lötverbindungen nicht wieder gelöst werden, wodurch unter Umständen Undichtigkeiten am Verdampfer entstehen.

Bekannt ist es aus der GB-A-547 358, bei einem Rohranschluß für ein Syphon eines Spülbeckens einen als umlaufende Sicke ausgebildeten Kragen am Ende eines Rohrbogens vorzusehen und den Kragen durch einen umgebördelten Rand einer Schraubschelle zu halten, in der das Anschlußrohr gehalten ist. Ein verlöteter Anschlußstutzen, wie er bei den vorher genannten Rohranschlüssen von Flachrohrverdampfern vorgesehen ist, liegt nicht vor.

Aus der US-PS 4 172 496 ist es auch bekannt, eine Rohr-zu-Rohr-Verbindung dadurch herzustellen, daß das eine Rohrende einen konischen sich vom Ende aus nach hinten erweiternden Sitz bildet, der in einen radialen Absatz übergeht und daß am anderen Rohrende ein Gegenkonus vorgesehen wird, der sich mit seinem freien Rand hinter den Absatz umbördeln läßt. Diese Ausgestaltung ist insbesondere für die Verbindung eines Kunststoffrohres mit einem Metallrohr günstig und erlaubt eine lötfreie Verbindung. Biegekräfte, die auf eines der Rohre wirken, können aber zu einer Verformung der Verbindung und zu einem Undichtwerden führen, insbesondere wenn es sich um zwei zu verbindende metallische Rohre handelt. Auch die dann vorgeschlagene Beschichtung eines der konischen Enden mit einem Dichtungsmaterial kann eine ausgerichtete Halterung des anzuschließenden Rohres nicht gewährleisten. Für einen Rohranschluß der eingangs genannten Art mit einem Anschlußnippel und einem einzulötenden Anschlußstutzen ist eine solche Bauart nicht geeignet.

Der Erfindung liegt die Aufgabe zugrunde, einen Rohranschluß der eingangs genannten Art zu schaffen, mit dem nach der Verlötung des Verdampfers Anschlußrohre anbringbar sind, ohne daß der Verdampfer in seinem Aufbau und in seiner Funktion beeinträchtigt wird.

Diese Aufgabe wird bei einem Rohranschluß der eingangs genannten Art durch die kennzeichnenden Merkmale des Patentanspruches 1 gelöst.

Nach dem Zusammensetzen der mit einer Lotplattierung versehenen Einzelteile werden in die Eintritts- und Austrittsöffnung des Verdampfers die Anschlußnippel eingesetzt, wobei der den ersten Anschlußstutzen aufnehmende Verschlußdeckel ebenfalls eine Lotplattierung aufweist. Daraufhin wird der Verdampfer verlötet und bis auf das Anbringen der Anschlußrohre fertiggestellt. Die Anschlußrohre weisen an ihren Enden einen Kragen auf, mit dem sie in den als Sitz ausgebildeten zweiten Anschlußstutzen des Anschlußnippels eingeführt werden. Dieser zweite Anschlußstutzen weist außerdem einen Bördelbund auf, der den Kragen des eingeführten Anschlußrohres umgibt und überragt. Um das Anschlußrohr im Anschlußnippel festzulegen, wird der Bördelbund mit einem geeigneten Werkzeug derart umgebogen, daß er den Kragen des Anschlußrohres hintergreift und den Kragen im Sitz des Anschlußstutzens festklemmt. Dadurch, daß der Kragen mit Abstand zum Rohrende vorgesehen und das Rohrende als kurzer Rohrabschnitt ausgebildet ist, wird durch Einstecken dieses Rohrabschnitts in einen Einschubsitz im Anschlußnippel eine weitere Sicherheit gegen mechanische Belastungen, insbesondere gegen Biegekräfte, geschaffen, da sich das Ende einerseits im Einschubsitz abstützen kann, andererseits von dem sich am Kragen anliegenden Bördelbund gehalten wird. Dabei kann der Rohrabschnitt mit einem größeren oder mit einem kleineren Durchmesser als das Anschlußrohr versehen sein, oder er kann den gleichen Durchmesser aufweisen.

Eine hohe Sicherheit gegen Undichtigkeiten auch bei extremen Beanspruchungen des Verdampfers wird dabei dadurch erreicht, daß eine Dichtung zwischen dem Kragen des Anschlußrohres und dessen Sitz im Anschlußstutzen vorgesehen ist. Diese Dichtung ist vorteilhaft als O-Ring ausgebildet. Durch das Umbördeln des Bördelbundes wird der Kragen des Rohres in den Sitz gepreßt und verquetscht die Dichtung, so daß eine gasdichte Verbindung hergestellt wird, die auch bei hohen Innendrücken und bei extremen mechanischen Belastungen noch sicher abdichtet. Durch die Erfindung wird daher eine fluiddichte, d.h. flüssigkeitsund gasdichte Verbindung geschaffen, die nachträglich, d.h. nach dem Verlöten des Verdampfers, herstellbar ist, ohne daß der Verdampfer in seinem Aufbau und in seiner Funktion beeinträchtigt wird. Diese Verbindung weist außerdem den Vorteil auf, daß sie kostengünstig und in wesentlich kürzerer Zeit als eine Lotverbindung herstellbar ist. Außerdem ist zum Erstellen der erfindungsgemäßen Verbindung keine Fachkraft notwendig.

Gemäß einem bevorzugten Ausführungsbeispiel ist der Kragen des Anschlußrohres als ringförmige Sicke ausgebildet. Diese Sicke kann z.B. durch Stauchung des Rohrendes mittels eines geeigneten Werkzeugs hergestellt werden.

Ein leichtes Umbördeln des Bördelbundes wird dadurch erreicht, daß der Anschlußnippel auf der dem Bördelbund gegenüberliegenden Seite eine Anlagefläche zum Abstützen eines Bördelwerkzeugs aufweist. Dieses im allgemeinen zangenartig ausgebildete Bördelwerkzeug wird vorteilhaft über den Anschlußnippel geschoben, so daß ein Werkzeugteil am Bördelbund und der andere Werkzeugteil an der Anlagefläche anliegen. Durch Aufeinanderzubewegen der beiden Werkzeugteile wird der Bördelbund umgebogen und verbindet das Anschlußrohr mit dem Anschlußnippel. Ein Optimum an Haltekraft und an aufzubringender Arbeit beim Umbiegen des Bördelbundes wird dadurch erreicht, daß der Bördelbund eine sich verjüngende Wanddicke aufweist.

Mit Vorteil ist der einzulötende erste Anschlußstutzen als Rohrzapfen ausgebildet. Dieser Rohrzapfen wird in einen mit einer Aufnahme versehenen Verschlußdeckel geschoben, wobei die Aufnahme mit einer Lotplattierung versehen ist, über die er in der Eintritts- bzw. Austrittsöffnung des Verdampfers durch Verlötung gehalten wird. Der Rohrzapfen kann mit abgesetzten Abschnitten versehen sein, so daß der Rohrzapfen nicht vollstänständig in die vorgesehene Bohrung eingeführt werden kann, sondern durch Anlage des größeren Abschnittes am Rand der Bohrung einen gewissen Abstand zum Verdampfer aufweist. Dadurch wird vor allem ein leichtes Ansetzen des Bördelwerkzeugs erreicht. Zudem müssen für Öffnungen mit unterschiedlichen Öffnungsquerschnitten nur die Durchmesser der abgesetzten Abschnitte darauf abgestimmt werden, so daß ein und derselbe Nippel für alle Öffnungen verwendet werden kann.

Bei beschränkten Platzverhältnissen wird eine geringe Bauhöhe dadurch erreicht, daß der Außendurchmesser des Bördelbundes der Höhe des Anschlußnippels entspricht. Dies erlaubt das Verlegen der Anschlußrohre nahe am Verdampfer, so daß sie gegebenenfalls noch am Verdampfer abgestützt werden können, und dadurch die mechanische Belastung des Anschlußnippels, z.B. durch ein Schwingen der Anschlußrohre, vermieden wird, und außerdem die Anschlußrohre mit einer am Verdampfer zu befestigenden Schutzverkleidung vor Verschmutzung, Beschädigung u.dgl. geschützt werden können.

Ein bevorzugtes Ausführungsbeispiel sieht vor, daß der Anschlußnippel im wesentlichen quaderförmig ausgebildet ist und die Anschlußstutzen im rechten Winkel zueinanderstehen. Dabei kann der Anschlußnippel als ein von zwei Seiten zu bearbeitendes Automatendrehteil ausgebildet sein. Dies erlaubt eine kostengünstige Herstellung des Nippels mit einer hohen Genauigkeit. Die Anschlußstutzen können aber auch, falls erforderlich, einen von 90° abweichenden Winkel zueinander aufweisen. Vorteilhaft besteht der Anschlußnippel aus Metall o.dgl. bördelfähigem Metall.

Weitere Einzelheiten und Merkmale der Erfindung ergeben sich aus der nachfolgenden Beschreibung, in der unter Bezugnahme auf die Zeichnung ein Ausführungsbeispiel näher beschrieben ist. Dabei zeigen:

Fig. 1 eine Seitenansicht eines Flachrohrverdampfers an der Zufluß- und Abflußöffnung geschnitten und

Fig. 2 einen Anschlußnippel mit Anschlußrohr in vergrößerter Darstellung.

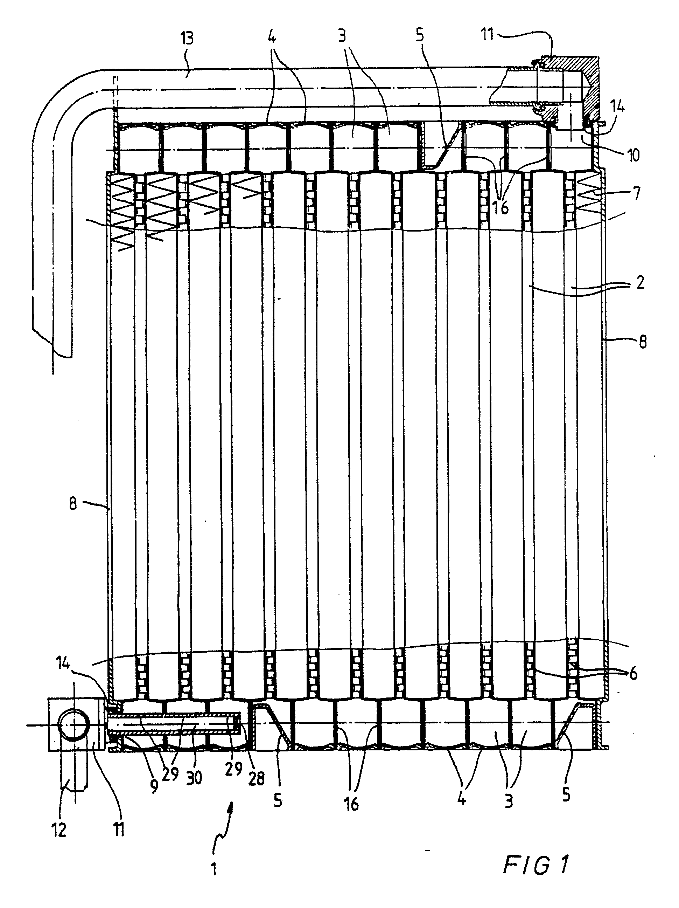

Die Fig. 1 zeigt einen Flachrohrverdampfer (1) mit mehreren vertikal angeordneten Flachrohren (2), die an ihren Enden (3) aufgeweitet sind und einander anliegen. Diese Flachrohre (2) sind mit Verschlußdeckeln (4 und 5) versehen, über die sie nach außen abgeschlossen sind und mit denen die Strömungsrichtung in den Flachrohren (2) bestimmt wird. Die Flachrohre (2) weisen eingelegte Turbulenzbleche (6) auf, mit denen eine Verbesserung des Wärmeübergangs bewirkt wird. Zwischen den Flachrohren (2) sind Wellrippen (7) vorgesehen, die die Wärme von den Flachrohren (2) ableiten und an die durchströmende Luft abgeben. Der Verdampfer (1) ist außenseitig mit Seitenteilen (8) umgeben, die einen Schutz für die seitlichen Wellrippen (7) darstellen und den Verdampfer (1) abschließen. Weiterhin weist der Verdampfer (1) an seiner Eintrittsöffnung (9) und an seiner Austrittsöffnung (10) Anschlußnippel (11) auf, an denen Anschlußrohre (12 und 13) festgelegt sind. Die miteinander zu verbindenden Flächen, d.h. die einander anliegenden Seiten der aufgeweiteten Enden (3), die an den Enden (3) anliegenden Seitenteile (8) sowie die Verschlußdeckel (4 und 5), sind mit einer Lotplattierung versehen, und werden in einer Vakuum-Lötkammer miteinander verlötet. Die Anschlußrohre (12 und 13) werden nach dem Verlöten des Verdampfers (1) angefügt und mit den Anschlußnippeln (11) mechanisch verbunden.

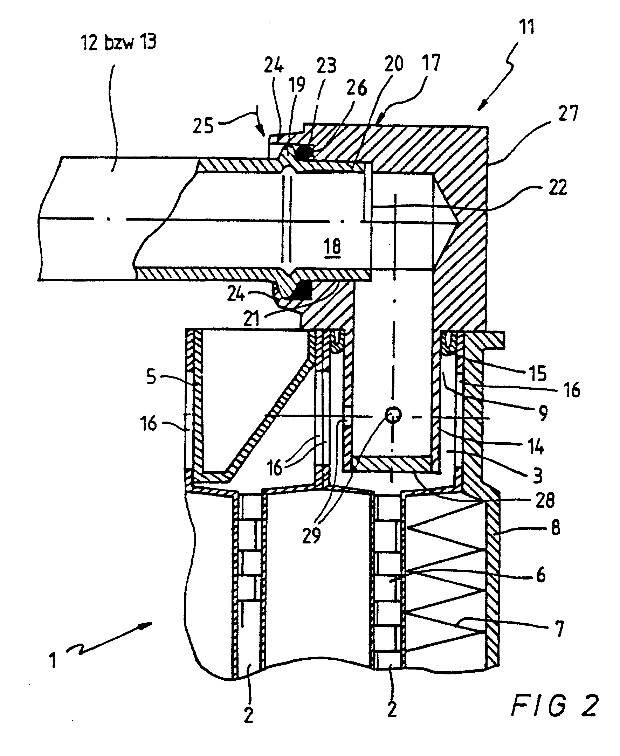

Der in Fig. 2 in vergrößerter Darstellung gezeigte Anschlußnippel (11) ragt mit seinem ersten Anschlußstutzen in die Eintrittsöffnung (9) des Flachrohrverdampfers (1) und ist in dieser Öffnung (9) über einen Verschlußdeckel (15), der eine den Außenabmessungen des Anschlußstutzens (4) entsprechende Öffnung aufweist, kraftschlüssig und fluiddicht festgelegt. Dabei weist der Verschlußdeckel (15) eine Lotplattierung auf, mit der sich z.B. in einer Lötkammer der Anschlußstutzen (14) mit dem Ende (3) des Flachrohres (2) flußmittelfrei verbinden läßt. Die Enden (3) der Flachrohre (2) sind über Verbindungsöffnungen (16) miteinander verbunden, so daß eine mehrflutige Durchströmung der Flachrohre (2) ermöglicht wird. In gewissen Abständen sind diese Öffnungen (16) mit den Verschlußdeckeln (5) verschlossen, wodurch Strömungswege gezielt umgelenkt werden.

Der Anschlußstutzen (14) des Anschlußnippels (11) ist axial mit einem eingesetzten Deckel (28) verschlossen und weist seitlich Austrittsöffnungen (29) auf, über die das Kältemittel, z.B. Freon o.dgl. in die betreffenden Enden (3) gezielt eingespritzt wird. Bei dem in Fig. 1 dargestellten Anschlußnippel (11), der in der Eintrittsöffnung (9) im Flachrohrverdampfer (1) festgelegt ist, ist der Anschlußstutzen (14) mit einem Einspritzrohr (30) verlängert. Über dieses Einspritzrohr (30) werden die Flachrohre (2a, 2b und 2c) gleichzeitig mit Kältemittel beaufschlagt, indem es durch die Öffnungen (29) direkt in die Rohre eingespritzt wird. Um die Verwendung eines Einspritzrohres (30) zu ermöglichen, wird der Anschlußnippel seitlich am Rohrende (3) des äußersten Flachrohres (2a) eingelötet, wobei vorteilhaft die Verbindungsöffnung (16) hierfür verwendet wird. Über ein Einspritzrohr (30) können auch mehr als 3 Flachrohre (2) gleichzeitig beaufschlagt werden.

Um ein gleichmäßiges Absaugen des Kältemittels aus den letzten Flachrohrenden (3) auf der Saugseite des Verdampfers (1) zu gewähren, ist der Anschlußstutzen (14) des in der Austrittsöffnung (10) festgelegten Anschlußnippels (11) derart kurz ausgebildet, daß er kaum in das aufgeweitete Ende (3) des letzten Flachrohres (2) hineinragt.

Der in Fig. 2 gezeigte Anschlußnippel (11) ist als Automatendrehteil gefertigt und ist im wesentlichen quaderförmig ausgebildet und weist einen rechtwinklig zum ersten Anschlußstutzen (14) angeordneten zweiten Anschlußstutzen (17) auf, in dem das Ende (18) eines Anschlußrohres (12 bzw. 13) festgelegt ist. Dieses Anschlußrohr (12 bzw. 13) besitzt einen Kragen (19), an den sich ein Rohrabschnitt (20) anschließt. Der Kragen (19) ist als ringförmige Sicke ausgebildet. Der zweite Anschlußstutzen (17) des Anschlußnippels (11) ist mit einem Einschubsitz (21) versehen, in den der Rohrabschnitt (20) bis zur Anlage des Kragens (19) an eine Dichtung (23) eingeschoben wird, wobei das Endes des Rohrabschnitts (20) noch einen geringen Abstand zu einem als Anschlag dienenden Absatz (22) aufweist. Der Kragen (19) ist von einem Bördelbund (24) umgeben, der in der obigen Darstellung in der Ausgangslage gezeigt ist, und durch Umbiegen in Richtung des Pfeils (25) in die Bördellage, wie sie in der unteren Darstellung gezeigt ist, umgelenkt wird. Dabei umgreift der Bördelrand (24) den Kragen (19) und hält somit das Ende (18) des Anschlußrohres (12 bzw. 13) sicher im Einschubsitz (21), wobei die Dichtung (23) verquetscht wird und den Innenraum des Anschlußnippels (11) fluiddicht abschließt. Dabei legt sich die Dichtung (23) an einen Sitz (26) und das Ende des Rohrabschnitts (20) am Absatz (22) an. Ein einfaches Umbördeln des Bördelbundes (24) wird dadurch ermöglicht, daß das Bördelwerkzeug sich an einer Anlagefläche (27), die an der dem Bördelbund (24) gegenüberliegenden Seite vorgesehen ist, abstützt. Vorteilhaft weist der Bördelbund (24) eine sich verjüngende Wandstärke auf, so daß es beim Umördeln zu keiner Materialanhäufung kommt.

Eine preiswerte Herstellung wird dadurch erreicht, daß der Anschlußnippel (1) nur von zwei Seiten bearbeitet werden muß, was in einer Automatendreh- bzw. fräsmaschine erfolgt.

## Ansprüche

1. Rohranschluß für Flachrohrverdampfer mit wenigstens einem Anschlußrohr, das mittels eines Anschlußnippels mit der Eintritts- bzw. Austrittsöffnung kraftschlüssig und fluiddicht verbunden ist, wobei der Anschlußnippel einen in die Öffnung einzulötenden ersten Anschlußstutzen und einen das Anschlußrohr aufnehmenden zweiten Anschlußstutzen aufweist, dadurch gekennzeichnet, daß der zweite Anschlußstutzen (17) als Sitz (26) für das einen Kragen (19) aufweisende Ende (18) des Anschlußrohres (12 bzw. 13) ausgebildet ist, einen den Kragen (19) überragenden und nach dem Einführen des Anschlußrohres (12 bzw. 13) in den Sitz (26) umzubiegenden Bördelbund (24) aufweist, daß der Kragen (19) mit Abstand zum Ende des Anschlußrohres (12 bzw. 13) vorgesehen ist und der freie Rohrquerschnitt (20) in einem Einschubsitz (21) im Anschlußnippel (11) liegt, und daß eine Dichtung (23) zwischen dem Kragen (19) des Anschlußrohres (12 bzw. 13) und dessen Sitz (26) vorgesehen ist.

2. Rohranschluß nach Anspruch 1, dadurch gekennzeichnet, daß der Kragen (19) als ringförmige Sicke ausgebildet ist.

3. Rohranschluß nach Anspruch 1, dadurch gekennzeichnet, daß die Dichtung (23) als O-Ring ausgebildet ist.

4. Rohranschluß nach einem der Ansprüche 1 und 2, dadurch gekennzeichnet, daß der Anschlußnippel (11) auf der dem Bördelbund (24) gegenüberliegenden Seite eine Anlagefläche (27) zum Abstützen eines Bördelwerkzeugs aufweist.

5. Rohranschluß nach einem der Ansprüche 1 bis 4, dadurch gekennzeichnet, daß der Bördelbund (24) eine sich verjüngende Wanddicke aufweist.

6. Rohranschluß nach einem der Ansprüche 1 bis 5, dadurch gekennzeichnet, daß der einzulötende erste Anschlußstutzen (14) als Rohrzapfen ausgebildet ist.

7. Rohranschluß nach Anspruch 6, dadurch gekennzeichnet, daß der Rohrzapfen abgesetzte Abschnitte aufweist.

8. Rohranschluß nach einem der Ansprüche 1 bis 7, dadurch gekennzeichnet, daß der Außendurchmesser des Bördelbundes (24) im wesentlichen der Höhe des Anschlußnippels (11) entspricht.

9. Rohranschluß nach einem der Ansprüche 1 bis 8, dadurch gekennzeichnet, daß der Anschlußnippel (11) im wesentlichen quaderförmig ausgebildet ist und die Anschlußstutzen (14 und 17) im rechten Winkel zueinander stehen.

10. Rohranschluß nach einem der Ansprüche 1 bis 9, dadurch gekennzeichnet, daß der Anschlußnippel (11) als ein von zwei Seiten zu bearbeitendes Automatendrehteil ausgebildet ist.

11. Rohranschluß nach einem der Ansprüche 1 bis 10, dadurch gekennzeichnet, daß der Anschlußnippel (11) aus Metall o.dgl. bördelfähigem Material besteht.

## Claims

1. A pipe connection for flat tube evaporators with at least one connection pipe which is connected in force-locking and fluid-tight manner by means of a connection nipple with the inlet and outlet opening, the connection nipple having a first pipe union to be soldered into the opening and a second pipe union receiving the connection pipe, characterized in that the second pipe union (17) is designed as a seat (26) for the end (18) of the connection pipe (12 or 13) having a collar (19), has a flanged collar (24) protruding from the collar (19) which has to be bent round after the introduction of the connection pipe (12 or 13) into the seat (26), in that the collar (19) is provided spaced from the end of the connection pipe (12 or 13) and the free pipe portion (20) is situated in an insertion seat (21) in the connection nipple (11), and in that a seal (23) is provided between the collar (19) of the connection pipe (12 or 13) and its seat (26).

2. A pipe connection according to claim 1, characterized in that the collar (19) is designed as an annular bead.

3. A pipe connection according to claim 1, characterized in that the seal (23) is designed as an O-ring.

4. A pipe connection according to either claim 1 or 2, characterized in that the connection nipple (11) has on the side opposite the flanged collar (24) a locating face (27) for supporting a flanging tool.

5. A pipe connection according to one of claims 1 to 4, characterized in that the flanged collar (24) has a diminishing wall thickness.

6. A pipe connection according to one of claims 1 to 5, characterized in that the first pipe union (14) to be soldered in is designed as a pipe spigot.

7. A pipe connection according to claim 6, characterized in that the pipe spigot has offset portions.

8. A pipe connection according to one of claims 1 to 7, characterized in that the outer diameter of the flanged collar (24) corresponds substantially to the height of the connection nipple (11).

9. A pipe connection according to one of claims 1 to 8, characterized in that the connection nipple (11) is substantially designed as a right parallelepiped and the pipe unions (14 and 15) are at right angles to each other,

10. A pipe connection according to one of claims 1 to 9, characterized in that the connection nipple (11) is designed as a part for automatic lathes to be machined from two sides.

11. A pipe connection according to one of claims 1 to 10 characterized in that the connection nipple (11) is of metal or similar flangeable material.

## Revendications

1. Raccordement de tuyau pour un évaporateur à tubes plats comportant au moins un tuyau de raccordement relié sous contrainte et de manière étanche aux fluides à l'orifice d'entrée ou à l'orifice de sortie au moyen d'un raccord, le raccord comprenant une première tubulure de raccordement se fixant par soudure dans l'orifice, ainsi qu'une seconde tubulure de raccordement recevant le tuyau de raccordement, caractérisé en ce que la seconde tubulure de raccordement (17) est conformée en siège (26) pour l'extrémité (18) du tuyau de raccordement (12 ou 13) qui comporte un collet (19), cette seconde tubulure de raccordement (17) comportant une collerette de sertissage (24) qui passe par dessus le collet (19) et qui doit être rabattue après introduction du tuyau de raccordement (12 ou 13) dans le siège (26), en ce que le collet (19) est prévu à distance de l'extrémité du tuyau de raccordement (12 ou 13) et la section libre du tuyau (20) est placée dans un siège d'introduction (21) situé à l'intérieur du raccord (11) et en ce qu' une garniture d'étanchéité (23) est prévue entre le collet (19) du tuyau de raccordement (12 ou 13) et son siège (26).

2. Raccordement selon la revendication 1, caractérisé en ce que le collet (19) est conformé en suage annulaire.

3. Raccordement selon la revendication 1, caractérisé en ce que la garniture d'étanchéité (23) est conformée en joint torique.

4. Raccordement selon l'une des revendications 1 et 2, caractérisé en ce que le raccord (11) comporte, du côté situé à l'opposé de la collerette de sertissage (24), une surface technique (27) par l'appui d'un outil de sertissage.

5. Raccordement selon l'une des revendications 1 à 4, caractérisé en ce que la collerette de sertissage (24) a une épaisseur de paroi qui va en s'amincissant.

6. Raccordement selon l'une des revendications l à 5, caractérisé en ce que la première tubulure de raccordement (14) devant être fixée par soudure est conformée en embout tubulaire.

7. Raccordement selon la revendication 6, caractérisé en ce que l'embout tubulaire comporte des tronçons épaulés.

8. Raccordement selon l'une des revendications 1 à 7, caractérisé en ce que le diamètre extérieur de la collerette de sertissage (24) correspond sensiblement à la hauteur du raccord (11).

9. Raccordement selon l'une des revendications 1 à 8, caractérisé en ce que le raccord (11) est sensiblement parallélépipédique et les tubulures de raccordement (14 et 17) sont à angle droit l'une par rapport à l'autre.

10. Raccordement selon l'une des revendications 1 à 9, caractérisé en ce que le raccord (11) est conformé en pièce qui s'usine au tour automatique par deux côtés.

11. Raccordement selon l'une des revendications 1 à 10, caractérisé en ce que le raccord (11) est en métal ou autre matériau analogue apte au sertissage.

FIG 1

FIG 2